Europäisches Patentamt

European Patent Office

Office européen des brevets

(19)

(11)  **EP 0 981 115 B1**

(12)  **EUROPÄISCHE PATENTSCHRIFT**

(45) Veröffentlichungstag und Bekanntmachung des Hinweises auf die Patenterteilung:
**08.02.2006 Patentblatt 2006/06**

(51) Int Cl.:
*G07F 7/10* (2006.01)        *G06F 1/00* (2006.01)
*G06K 19/073* (2006.01)      *G06F 19/00* (2006.01)

(21) Anmeldenummer: **99113007.1**

(22) Anmeldetag: **06.07.1999**

(54) **Verfahren zur Ausführung eines Verschlüsselungsprogramms zur Verschlüsselung von Daten in einem mikroprozessorgestützten, tragbaren Datenträger**

Encyphering program execution method for data encyphering in a microprocessor-supported portable data carrier

Méthode d'exécution d'un programme de chiffrage pour chiffrer des données dans un support de données portable avec microprocesseur

(84) Benannte Vertragsstaaten:
**AT BE CH CY DE DK ES FI FR GB GR IE IT LI LU MC NL PT SE**

(30) Priorität: **20.08.1998 DE 19837808**

(43) Veröffentlichungstag der Anmeldung:
**23.02.2000 Patentblatt 2000/08**

(73) Patentinhaber: **Orga Kartensysteme GmbH**
**33104 Paderborn (DE)**

(72) Erfinder:
• **Jahnich, Michael, Dr.**
  **33098 Paderborn (DE)**
• **Wüppenhorst, Guido**
  **33102 Paderborn (DE)**
• **Doppmeier, Werner**
  **33397 Rietberg (DE)**

(74) Vertreter: **Stöckeler, Ferdinand**
**Schoppe, Zimmermann,**
**Stöckeler & Zinkler**
**Postfach 246**
**82043 Pullach bei München (DE)**

(56) Entgegenhaltungen:
EP-A- 0 448 262          WO-A-97/33217
WO-A-99/48239            WO-A-99/60534

• KOCHER P C: "TIMING ATTACKS ON IMPLEMENTATIONS OF DIFFIE-HELLMAN, RSA, DSS, AND OTHER SYSTEMS" ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS, PROCEEDINGS OF THE ANNUAL INTERNATIONAL CRYPTOLOGY CONFERENCE (CRYPTO), BERLIN, SPRINGER, DE, Bd. CONF. 16, 18. August 1996 (1996-08-18), Seiten 104-113, XP000626590 ISBN: 3-540-61512-1
• FORREST S ET AL: "Building diverse computer systems" OPERATING SYSTEMS, 1997., THE SIXTH WORKSHOP ON HOT TOPICS IN CAPE COD, MA, USA 5-6 MAY 1997, LOS ALAMITOS, CA, USA,IEEE COMPUT. SOC, US, 5. Mai 1997 (1997-05-05), Seiten 67-72, XP010226847 ISBN: 0-8186-7834-8
• COHEN F B: "OPERATING SYSTEM PROTECTION THROUGH PROGRAM EVOLUTION" COMPUTERS & SECURITY, ELSEVIER SCIENCE PUBLISHERS. AMSTERDAM, NL, Bd. 12, Nr. 6, 1. Oktober 1993 (1993-10-01), Seiten 565-584, XP000415701 ISSN: 0167-4048
• MENKUS B: "TWO IMPORTANT DATA ENCRYPTION STRUCTURES REPORTED BROKEN IN RECORD TIMES" EDPACS, AUERBACH PUBLISHERS, NEW YORK, NY, US, Bd. 26, Nr. 7, Januar 1999 (1999-01), Seiten 15-18, XP000884687 ISSN: 0736-6981

**Beschreibung**

Die Erfindung bezieht sich auf ein Verfahren zur Ausführung eines Verschlüsselungsprogramms zur Verschlüsselung von Daten in einem mikroprozessorgestützten, tragbaren Datenträger. Ein derartiger tragbarer Datenträger ist beispielsweise eine Chipkarte, die zum Datenaustausch und zur Energieversorgung mit einem entsprechenden Karterminal, dem Datenaustausch-gerät, verbunden wird. Mikroprozessorchipkarten, die in der Lage sind, anhand eines Verschlüsselungsprogramms Daten zu verschlüsseln, werden beispielsweise in Form von Bankkarten oder in Form von Zugangsberechtigungskarten zu Mobilfunknetzen nach dem GSM-Standard eingesetzt. Der Verschlüsselung von Daten und Informationen kommt dabei eine immer größere Bedeutung zu. Dementsprechend steigen auch die Anforderungen an die Sicherheit der Verschlüsselung gegenüber Angriffen.

Die tragbaren Datenträger, die Gegenstand der vorliegenden Erfindung sind, verfügen nicht über eine eigene Energieversorgung, beispielsweise in Form einer Batterie oder Solarzelle. Die Energieversorgung des tragbaren Datenträgers erfolgt durch das Datenaustauschgerät, mit dem dann auch die Kommunikation stattfindet. Chipkarten weisen auf der Kartenoberfläche elektrische Kontaktflächen auf, um über korrespondierende Kontakte im Datenaustauschgerät mit diesem kommunizieren zu können. Eine dieser Kontaktflächen ist für die Zuführung der Versorgungsspannung und des Versorgungsstroms vorgesehen. Eine andere Kontaktfläche dient dem Masseanschluß, eine der seriellen, bidirektionalen Datenübertragung vom und zum Datenaustauschgerät, eine der Zuführung eines Taktsignals, eine weitere Kontaktfläche ist für den Empfang eines Reset-Signals vorgesehen.

Die tragbaren Datenträger, die Gegenstand der Erfindung sind, weisen einen integrierten Halbleiterbaustein auf, in dem ein Mikroprozessor mit einem Festwertspeicher (ROM- Read Only Memory), einem flüchtigen Arbeitsspeicher (RAM- Random Access Memory), in den das Betriebssystem oder zumindest Teile davon abgelegt sind, und einem nichtflüchtigen, änderbaren Speicher (EEPROM - Electrical Erasable Programmable Read Only Memory) auf. Damit stellt der tragbare Datenträger eine Mikrorechnereinheit dar, die jedoch einer externen (von außerhalb des tragbaren Datenträgers) Spannungs- und Stromversorgung Bedarf.

Der Mikroprozessor bildet die Verarbeitungsschaltungen zur Ausführung von Programmen, insbesondere auch von Verschlüsselungsprogrammen, die im EEPROM-Speicher und/oder ROM-Speicher gespeichert sind. Hier sind ebenfalls geheime Schlüssel von außen nicht zugänglich abgespeichert. Diese Schlüssel dienen der Verschlüsselung der Daten. Da die Verschlüsselungsprogramme (Algorithmen) an sich meistens bekannt sind, liegt die ganze Sicherheit hinsichtlich der Verschlüsselung der Daten bei den geheimen Schlüsseln.

Die verschlüsselten Daten sind demnach eine Funktion des Verschlüsselungsprogramms in Abhängigkeit von den unverschlüsselten Daten (Klartext) und wenigstens einem geheimen Schlüssel:

$$D_{encrypt} = S\ (K_{encrypt},\ Daten),$$

wobei S für das Verschlüsselungsprogramm steht, $D_{encrypt}$ für die verschlüsselten Daten steht und $K_{encrypt}$ den geheimen Schlüssel bezeichnet.

Ein derartiges, allgemein bekanntes Verschlüsselungsprogramm ist beispielsweise der sogenannte DES-Algorithmus. Ein solches Verschlüsselungsprogramm besteht wiederum aus mehreren zeitlich aufeinanderfolgenden Programmebenen (Funktionsblöcken), die ihrerseits wiederum mehrere Unterprogramme aufweisen, wobei die zeitliche Ausführungsreihenfolge von bestimmten Unterprogrammen ohne Einfluß auf das Ergebnis der Verschlüsselung ist. Man spricht hier von an sich parallelisierbaren Unterprogrammen, die jedoch in dem tragbaren Datenträger sequentiell abgearbeitet werden. Unterprogramme in diesem Sinne können sein : Prozeduren, Routinen und Kommandos.

Aufgrund des physikalischen Aufbaus und der physikalischen Eigenschaften der in den tragbaren Datenträgern eingesetzten Halbleiterchips ist die Strom-bzw. Leistungsaufnahme des tragbaren Datenträgers während der Ausführung von Programmen nicht konstant, sondern vielmehr zeitlichen Schwankungen unterworfen. Dabei hat es sich gezeigt, daß die Schwankungen des Versorgungsstroms sogar zu bestimmten Programmkommandos und zur binären Struktur (Zahl der Nullen und Einsen) der zu verarbeitenden Daten korreliert. Unter Umständen erfolgen die Schwankungen sogar synchron zum Takt mit dem der tragbare Datenträger betrieben wird. Für einen mit der Technik vertrauten, unbefugten Benutzer ist es ein leichtes diese Schwankungen des Versorgungsstromes, der vom Datenaustauschgerät an den tragbaren Datenträger geliefert wird mittels eines Speicher-Oszilloskops aufzuzeichnen, indem er in die Versorgungsstromleitung einen Meßwiderstand einbaut und den Spannungsabfall an diesem auf dem Oszilloskop aufzeichnet. Mit Blick auf die Ausführung von Verschlüsselungsprogrammen in tragbaren Datenträger ergibt sich hiermit für Angreifer die Möglichkeit über die Aufzeichnung der Stromschwankungen beim Ausführen des Verschlüsselungsprogramms Rückschlüsse auf die verwendeten geheimen Schlüssel und/oder die zu verschlüsselten Daten zu ziehen. Dies wird insbesondere dadurch erleichtert, daß die Verschlüsselungsprogramme einschließlich der darin verwendeten Unterprogramme an sich bekannt sind. Zeichnet ein Angreifer nun für eine Vielzahl von Verschlüsselungen mit jeweils unterschiedlichen Daten jeweils die Stromschwankungen auf, so kann er aus Unterschieden in den jeweiligen Stromschwankungs-Charakteristika Rückschlüsse auf die oder den verwendeten Schlüssel ziehen. Hierbei kann ein Angreifer auf aus der Mathematik bekannte statistische Analysemittel und Korrelationsverfahren zurückgreifen. Hat der Angreifen auf diese Weise den geheimen Schlüssel herausgefunden, so ist Sicherheit der Verschlüsselung nicht mehr gewährleistet, da die Verschlüsselungsprogramme an sich bekannt sind. Insbesondere bei symmetrischen Verschlüsselungsverfahren, wo zur Ver- und Entschlüsselung ein und derselbe Schlüssel verwendet wird, wäre der Angreifer dann in der Lage verschlüsselte Daten zu entschlüsseln.

Ein derartiger Angriff auf die Sicherheit von tragbaren Datenträgern wird als Differenital Power Analysis (DPA) bezeichnet. Zur Lösung dieses Problems wird in der C2-Intem, Edition Nr. 67, vom 15.7.98 vorgeschlagen, in den tragbaren Datenträger eine zusätzliche elektronische Schaltung einzubringen, die die Stromschwankungen kompensieren soll, so daß ein Angreifer diese nicht mehr feststellen kann und daraus Rückschlüsse ziehen kann.

Diese Lösung ist jedoch sehr aufwendig und teuer, da sie die Implementierung eines zusätzlichen elektronischen Bauteils erfordert. Da jedoch insbesondere der Chipkartenmarkt

Die nachveröffentlichte WO 9948239 A bezieht sich auf ein Verfahren zur Datensicherung unter Verwendung eines kryptographischen Algorithmus, das das Ausführen zumindest eines Zyklus, der wiederholte Operationen einer Verarbeitung von Datenelementen durchführt, um verschlüsselte Informationen zu erzeugen, aufweist. Das Verfahren umfasst einen Schritt eines zufälligen Modifizierens der Ausführung zumindest einer Operation von einem Zyklus zu dem nächsten oder von zumindest einem der Datenelemente, derart, dass die verschlüsselten Informationen durch die zufällige Modifikation nicht verändert werden. Beispielsweise kann eine zufällige Bestimmung der Ausführungsreihenfolge bestimmter Operationen im Laufe eines Ausführungszyklus des Algorithmus erfolgen. Dazu werden solche Operationen verwendet, deren Ausführungsreihenfolge untereinander keinen Einfluss auf das Ergebnis hat. Zur Durchführung einer Bestimmung kann man am Ende der gewählten Operation in Abhängigkeit des Werts einer Zufallszahl einen bedingten Sprung zu bestimmten Operationen vorsehen oder eine Adressentabelle der zufällig durchlaufenden einzelnen Operationen definieren. WO 9948239 gilt als Stand der Technik nach Artikel 54(3) EPÜ in den Vertragsstaaten DE, ES, FR, GB, und NL, die in beiden Anmeldungen benannt worden sind.

Aus der ebenfalls nachveröffentlichten WO 9960534 A ist ein Verfahren bekannt, bei dem, um zu verhindern, dass nicht autorisierte Personen geheime Chipdaten durch Abhören von Signalmustern erhalten, sicherheitsrelevante Operationen nur auf einer Basis von Befehlen und Befehlssequenzen ausgeführt werden, deren Verwendung es nicht möglich macht, die Daten, die verarbeitet werden, aus den Signalmustern des Chips abzuleiten. Diesbezüglich offenbart diese Schrift unter anderen die Reihenfolge der Abarbeitung solcher Operationen, die gleichzeitig abgearbeitet werden können, bei jedem einer Mehrzahl von Durchläufen zu variieren. Dabei kann die Variation der Reihenfolge entweder nach einem fest vorgegebenen Schema oder zufallsbedingt erfolgen, indem mittels einer Zufallszahl jeweils festgelegt wird, welche der Operationen als nächste abgearbeitet wird. WO 9960534 gilt als Stand der Technik nach Artikel 54(3) EPÜ in den Vertragsstaaten AT, BE, CH/LI, CY, DE, DK, ES, FI, FR, GB, GR, IE, IT, LU, MC, NL, PT, und SE, die in beiden Anmeldungen benannt worden sind.

Aus der WO 97/33217 A ist eine integrierte Schaltung bekannt, die unerlaubte Beobachtungen eines internen Verhaltens verhindert. Dazu sind gemäß dieser Schrift Entkorreliermittel des Ablaufs von mindestens einer Befehlsfolge eines Programms mit den internen oder externen elektrischen Signalen der Schaltung vorgesehen. Insbesondere werden Taktgeberimpulse oder Taktimpulse erzeugt, deren zeitliche Verteilung zufällig ist. Die Entkorreliermittel können einen Zufallsgeber umfassen, der eine Entsynchronisierung der Ausführung der Programmfolge im Prozessor ermöglicht. Die Entkorreliermittel können ferner ein System zur Erzeugung zufälliger Unterbrechungen umfassen. Darüber hinaus können die Entkorreliermittel die Ausführung von Zeitfolgen umfassen, deren Befehle und Ausführungszeiten verschieden und welche zufällig ausgewählt werden.

Die DE 0 448 262 A2 offenbart eine sichere Datenverarbeitungsroutine, bei der die Dauer zwischen dem Auftreten beobachtbarer externer Ereignisse und der Ausführung einer vorbestimmten Routine zufällig variiert wird. Dabei kann eine von mehreren Zwischenroutinen, die unterschiedliche Dauern aufweisen, zufällig ausgewählt werden.

Bei P.C. Kocher: "Timing Attacks On Implementations Of Diffie-Hellman, RSA, DSS, And Other Systems", Advances In Cryptology - Crypto '96. 16th. Annual International Cryptology Conference, Santa Barbara, Aug, 18-22, 1996. Proceedings, Proceedings of the Annual International Cryptology Conference (Crypto), Berlin, Springer, DE, Bd. Conf. 16, 18. August 1996 (1996-08-18), Seiten 104-113, sind Attacken auf Verschlüsselungsalgorithmen beschrieben. Um derartige Attacken zu verhindern, wird ein Zufallszahlenpaar eingeführt, wobei vor einer modularen Potenzierungsoperation die Eingangsnachricht mit einer der Zufallszahlen multipliziert wird, während nachfolgend das Ergebnis durch eine Multiplikation mit der anderen Zufallszahl korrigiert wird.

Bei S. Forrest u.a.: "Building diverse computer systems", Operating Systems, 1997., The Sixth Workshop On Hot Topics In Cape Cod, MA, USA 5-6 May 1997, Los Alamitos, CA, USA, IEEE Comput. Soc, US, 5. Mai 1997 (1997-05-05), Seiten 67-72, ist der Aufbau diverser Computersysteme beschrieben, wobei als Möglichkeit, um eine Diversity zu erreichen, das Einfügen von nicht-funktionellen Sequenzen an zufälligen Orten, das Umsortieren eines Codes, das Speicherlayout sowie andere Transformationen genannt sind.

Schließlich ist aus F.B. Cohen: "Operating System Protection Through Program Evolution", Computers & Security, Elsevier Science Publishers, Amsterdam, NL, Bd. 12, Nr. 6, 1. Oktober 1993 (1993-10-01), Seiten 565-584, ein Betriebssystemschutz unter Verwendung einer Programmevolution bekannt. Verschiedene Techniken zur Programmevolution werden angesprochen, unter anderen eine Befehlsumordnung, eine Ersetzung von Variablen, ein Hinzufügen und Entfernen von Sprüngen, ein Hinzufügen und Entfernen von Aufrufen, eine Hinzufügung von Datensalat, und dergleichen.

Aufgabe der Erfindung ist es daher, tragbare Datenträger der oben genannten Art gegenüber einem Angriff auf die Sicherheit bei der Datenverschlüsselung in effektiver, einfacher und kostengünstiger Weise sicherer zu machen.

Diese Aufgabe wird durch die Merkmale der Patentansprüche 1 bis 3 gelöst. Die sich daran anschließenden Unteransprüche enthalten vorteilhafte Ausgestaltungen der Erfindung.

Erfindungsgemäß wird bei der Ausführung von Verschlüsselungsprogrammen, die aus mehreren Unterprogrammen bestehen, so verfahren, daß die zeitliche Ausführungsreihertfolge von mindestens zwei parallelisierbaren Unterprogrammen unter Berücksichtigung von mindestens einer Zufallszahl bei jeder Programmausführung zufällig vertauscht wird. Parallelisierbare Unterprogramme bei DES- Verschlüsselungsprogrammen sind beispielsweise die dem Fachmann bekannten, sogenannten S-Boxen.

Durch diese erfindungsgemäße Verfahrensweise werden zufällig in für einen Angreifer nicht vorhersehbarer Weise Stromschwankungen erzeugt, die es ihm erheblich erschweren oder gar unmöglich machen, anhand der aufgezeichneten Stromschwankungen Rückschlüsse auf den geheimen Schlüssel oder die zu verschlüsselnden Daten zu ziehen. Je größer die Zahl der zufällig vertauschten (permutierten) Unterprogramme, desto "chaotischer" sind die Stromschwankungen und desto schwieriger ist es für einen Angreifer, geheime Daten mittels einer mathematischen Analyse der Stromschwankungen auszuspionieren.

Das erfindungsgemäße Verfahren läßt sich in einfacher und kostengünstiger Weise programmtechnisch (softwaremäßig) in den tragbaren Datenträger implementieren. Zusätzliche elektronische Bausteine sind nicht notwendig.

Anhand der beigefügten Zeichnungen soll die Erfindung nachfolgend näher erläutert werden. Es zeigt:

Fig. 1   eine Versuchsanordnung zur Aufzeichnung von Stromschwankungen bei der Ausführung von Verschlüsselungsprogrammen,

Fig.2   ein Beispiel für den zeitlichen Verlauf des Versorgungsstroms während der Ausführung eines Verschlüsselungsprogramms,

Fig.3   ein schematisches Strukturgramm eines Verschlüsselungsprogramms,

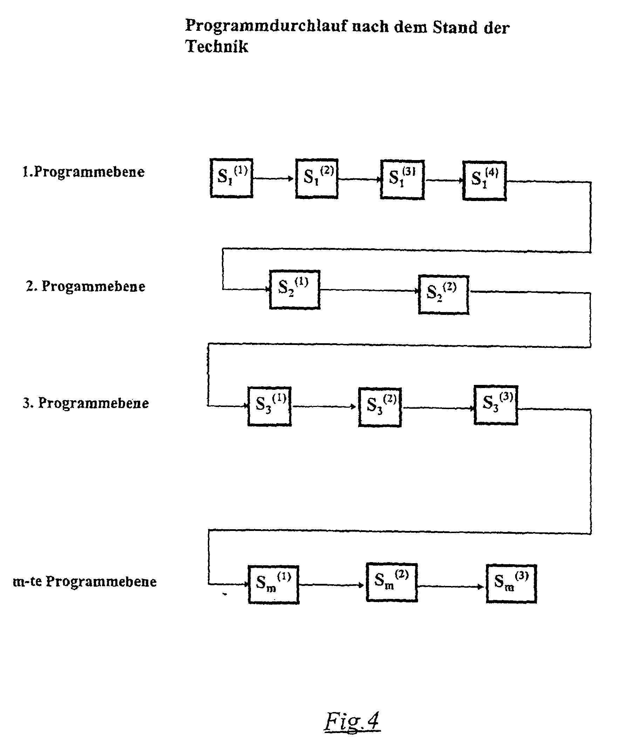

Fig.4   den fixen Programmdurchlauf bei der Ausführung eines Verschlüsselungsprogramms nach dem Stand der Technik,

Fig.5   ein schematisches Strukturgramm eines Verschlüsselungsprogramms, das um Attrappen-Unterprogramme (gestrichelt eingezeichnet) ergänzt wurde,

Fig.6   eine Tabelle mit den Startadressen von parallelisierbaren Unterprogrammen,

Fig.7   die Vertauschung von Startadressen mittels Zufallszahlen und die dementsprechend geänderte Bearbeitungsreihenfolge der Unterprogramme.

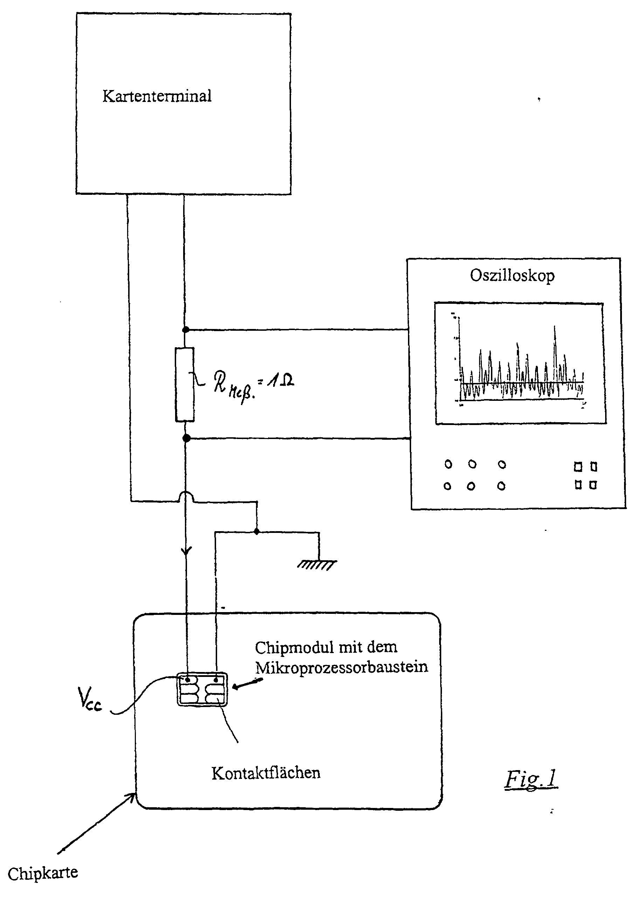

In Figur 1 ist ein tragbarer Datenträger in Form einer Mikroprozessor-Chipkarte gezeigt. Der integrierte Halbleiterbaustein mit dem Mikroprozessor und den Speichern (RAM, ROM, EEPROM) befindet sich in einem Chipmodul, das als separates Bauteil in den Kartenkörper eingesetzt wird. Auf dem Chipmodul befinden sich die elektrischen Kontaktflächen zum Datenaustausch und zur Energieversorgung in Verbindung mit dem Datenaustauschgerät (in dem dargestellten Fall ist dies ein Kartenterminal). Aus Gründen der Übersichtlichkeit ist nur die Strom- und Spannungsversorgungsleitung vom Kartenterminal an die entsprechende Kontaktfläche der Karte sowie die Masseleitung eingezeichnet. Für den vorstehend beschriebenen DPA-Angriff auf die Chipkarte, wird in die Stromversorgungsleitung ein Meßwiderstand (z.B. ein 1 Ω) eingebaut und über den Spannungsabfall an diesem Widerstand indirekt die Stromschwankungen gemessen und an einem Speicheroszilloskop aufgezeichnet.

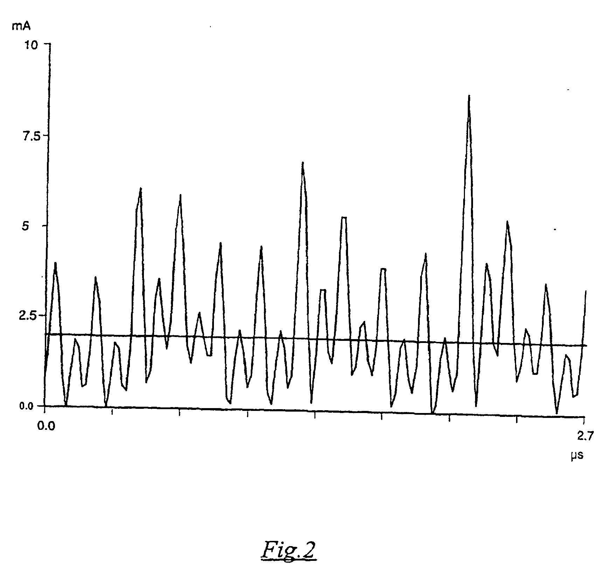

Wie man in Fig. 2 erkennen kann sind die Stromschwankungsamplituden, die während der Ausführung eines Verschlüsselungsprogramms auftreten können, stellenweise ein Vielfaches der mittleren Stromaufnahme (Gleichstromanteil). Ein Angreifer könnte nun das Verschlüsselungsprogramm in der Chipkarte mehrfach ausführen lassen und dabei jeweils die Stromschwankungen aufzeichnen und mittels mathematischer Analysemethoden versuchen, herauszufinden, ob es Korrelationen zwischen den einzelnen Aufzeichnungen gibt. Zum Beispiel könnte er versuchen herauszufinden, ob bei den verschiedenen Ausführungen des Verschlüsselungsprogramms jeweils an einem bestimmten Zeitpunkt (Zeitabschnitt) gleiche Stromschwankungen aufgetreten sind, die charakteristisch sind für die Verarbeitung von Daten (Daten in diesem Sinne sind auch geheime Schlüssel) mit einer bestimmen Bitmusterstruktur und/oder charakteristisch für die Ausführung von bestimmten Befehlen. Kennt der Angreifer das Verschlüsselungsprogramm und weiß, an welchen Stellen im Programmablauf normalerweise bspw. Schlüssel verarbeitet werden oder bestimmte Befehle ausgeführt werden, so kann er damit an sich geheime Schlüssel ausspionieren.

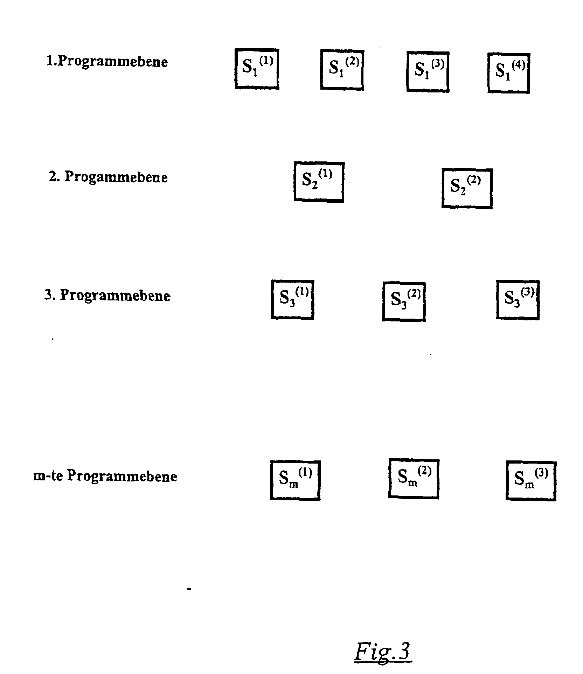

In Figur 3 ist ein schematisches Strukturgramm eines Verschlüsselungsprogramms (S) dargestellt. Ein solches Programm besteht aus verschiedenen, zeitlich aufeinanderfolgenden Programmebenen (1 bis m). Innerhalb dieser Programmebenen gibt es wiederum verschiedene Unterprogramme, von denen zumindest einige parallelisierbar sind, d.h. die Reihenfolge in der diese Programme zeitlich hintereinander ausgeführt werden ist unerheblich..

Nach dem Stand der Technik wurde die zeitliche Ausführungsreihenfolge dieser parallelisierbaren Unterprogramme jedoch einmal vom Programmierer festgelegt, was zur Folge hat, daß der Programmdurchlauf durch das Verschlüsselungsprogramm mit seinen Unterprogrammen immer der gleiche ist. Selbst wenn ein Angreifer die Ausführungsreihenfolge der an sich parallelisierbaren Unterprogramme zunächst nicht kennt, so kann er sie durch einen DPA-Angriff doch herausfinden, wenn er das Verschlüsselungsprogramm nur hinreichend oft durchlaufen läßt und jeweils die Stromschwankungen aufzeichnet. Da das Verschlüsselungsprogramm immer gleich durchlaufen wird, lassen sich mit Hilfe mathematischer Methoden Korrelationen zwischen den einzelnen Stromschwankungsaufzeichnungen finden, die Rückschlüsse auf den Programmablauf und darüber hinaus auf geheime Schlüssel gestatten.

Dadurch, daß der Programmablauf erfindungsgemäß jeweils durch zufällige Vertauschung von parallelisierbaren Unterprogrammen ein anderer ist, lassen sich derartige Korrelationen von einem Angreifer nicht mehr oder nur noch mit einem unverhältnismäßig hohen Aufwand herausfinden. Das Ausspionieren von geheimen Schlüsseln wird somit wirksam verhindert oder zumindest erheblich erschwert.

Die zur zufälligen Vertauschung der Unterprogramme verwendeten Zufallszahlen werden vorzugsweise in einem Zufallszahlengenerator des Chipkarte erzeugt. Ein solcher Zufallszahlengenerator kann beispielsweise in Form eines Softwareprogramms in der Chipkarte implementiert sein. Derartige Programme sind dem Fachmann bekannt. Ferner kann der Zufallszahlengenerator auch eine elektronische Schaltung im tragbaren Datenträger sein (Hardwarevariante). Alternativ zur Erzeugung einer Zufallszahl in der Chipkarte, kann die Zufallszahl auch von dem Kartenterminal an die Chipkarte übermittelt werden.

Bei einem Verschlüsselungsprogramm, das mehrere bei der Programmausführung zeitlich aufeinanderfolgende Programmebenen mit jeweils mehreren parallelisierbaren Unterprogrammen aufweist, sind für das erfindungsgemäße Verfahren zwei Ausführungsvarianten vorgesehen.

In der ersten Ausführungsvariante wird jeweils vor Beginn des eigentlichen Verschlüsselungsprogramms die zeitliche Ausführungsreihenfolge für die Ausführung der Unterprogramme auf allen Programmebenen unter Berücksichtigung der Zufallszahl(en) festgelegt. Dabei kann es durchaus so sein, daß nicht notwendiger Weise alle parallelisierbaren Unterprogramme zufällig vertauscht werden, d.h. es kann auch Programmebenen mit parallelisierbaren Unterprogrammen geben, auf denen keine zufällige Vertauschung stattfindet, so daß die Unterprogramme dieser Programmebene bei jedem Programmdurchlauf immer in derselben Reihenfolge ausgeführt werden.

In der zweiten Ausführungsvariante steht die Ausführungsreihenfolge aller Unterprogramme auf allen Programmebenen nicht schon jeweils vor dem Start des eigentlichen Verschlüsselungsprogramms fest. Hier wird jeweils erst vor dem Eintritt in eine neue Programmebene die zeitliche Ausführungsreihenfolge für die Unterprogramme auf dieser Programmebene unter Berücksichtigung einer Zufallszahl(en) bestimmt.

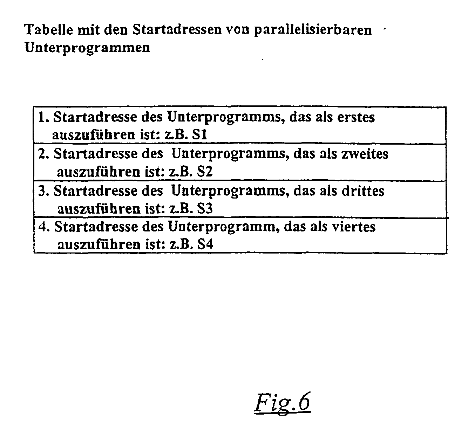

Zur Realisierung der Vertauschung der Ausführungsreihenfolge von parallelisierbaren Unterprogrammen wird vorzugsweise mit einer Tabelle gearbeitet, in der die Programmstartadressen der parallelisierbaren Unterprogramme hinsichtlich ihrer Reihenfolge-Position gespeichert sind -vgl. Fig.6. Diese Tabelle wird vorzugsweise im RAM-Speicher der Chipkarte programmäßig erzeugt. Die Einträge in diese Tabelle werden nun - wie weiter unten erläutert wird - erfindungsgemäß zufällig vertauscht.

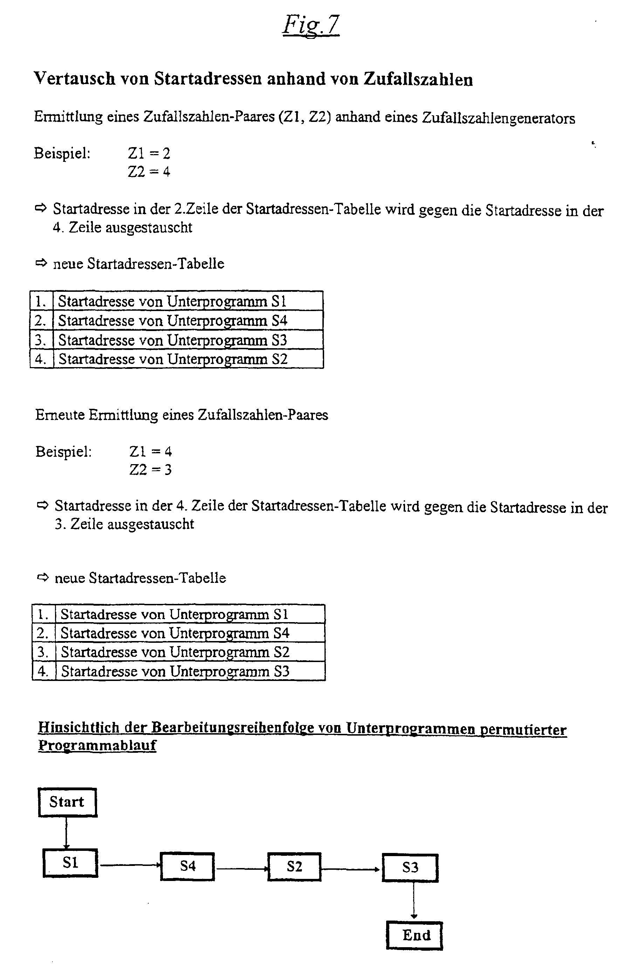

Die Programmstartadressen sind ferner im nichtflüchtigen EEPROM-Speicher der Chipkarte gespeichert. Vor dem Start des eigentlichen Verschlüsselungsprogramms werden die Programmstartadressen der Unterprogramme nacheinander aus dem EEPROM und/oder ROM-Speicher geladen und ins RAM geschrieben. Damit wird die Tabelle gewissermaßen auf Anfangswerte gesetzt. Nun wird ein Zufallszahlen-Paar bestehend aus zwei Zufallszahlen (Z1, Z2) erzeugt, dabei entspricht die Menge der möglichen Zufallszahlen der Menge der Reihenfolge-Positionen -vgl. Fig.7. Enthält das Verschlüsselungsprogramm beispielsweise 4 parallelisierbare Unterprogramme, so existieren auch 4 Reihenfolge-Positionen (1,2,3,4), die bestimmen, in welcher Reihenfolge diese ausgeführt werden. Dementsprechend gibt es auch 4 mögliche Zufallszahlen (1,2,3,4). Wird nun das Zufallszahlen-Paar Z1 = 2/Z = 4 generiert, so wird mittels eines entsprechenden Programms die Startadresse des 4. Unterprogramms auf die Reihenfolge-Position 2 geschrieben und die Startadresse des 2. Unterprogramms auf die Reihenfolge-Position 4.

Durch die erneute Generierung eines Zufallszahlen-Paares und demgemäßes erneutes Vertauschen wird die Ausführungsreihenfolge gegenüber der Anfangseinstellung weiter "durcheinandergewürfelt". Lautet das zweite Zufallszahlen-Paar bspw. (4,3) so wird die Startadresse des 2. Unterprogramms auf die Reihenfolge-Position 3 geschrieben und die Startadresse des 3. Unterprogramms auf die Reihenfolge-Position 4.

Die Reihenfolge, in der die Unterprogramme nun innerhalb des Verschlüsselungsprogramms ausgeführt werden, ist dann:

> 1.Unterprogramm(S1)/ 4.Unterprogramm (S4)/
> 2.Unterprogramm (S2)/3.Unterprogramm (S3).

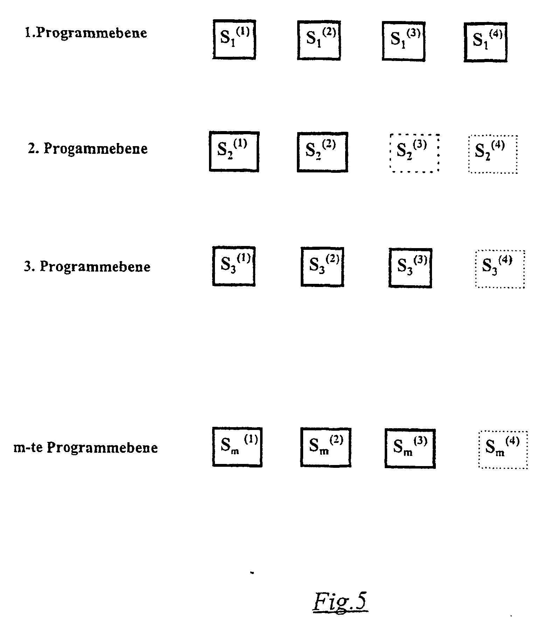

In Fig. 5 ist ein schematisches Strukturgramm eines Verschlüsselungsprogramms bestehend aus mehreren Programmebenen gezeigt, wobei dieses auf bestimmten Programmebenen um sogenannte "Attrappen-Unterprogramme" erweitert wurde. Diese "Attrappen-Unterprogamme" sind eigentlich nicht Bestandteil des Verschlüsselungsprogramms. Ihre Ausführung hat somit auch keinen Einfluß auf das Verschlüsselungsergebnis. Allerdings bewirkt ihre Ausführung in vorteilhafter Weise zusätzliche, bei einer DPA-Analyse zu beobachtende Stromschwankungen und tragen somit zu einer weiteren Verwirrung eines Angreifers bei. "Attrappen-Unterprogamme" in diesem Sinne sind wiederum: Prozeduren, Routinen und Kommandos, deren Ausführung allerdings keinen Einfluß auf die Verschlüsselung an sich hat. In diesem Sinne sind sie programmtechnischer Ballast, der sich jedoch vorteilhaft gegenüber einem DPA-Angriff verwenden läßt, insbesondere dann, wenn auch diese "Attrappen-Unterprogramme" erfindungsgemäß zufällig mitvertauscht werden. Durch die Implementierung von "Attrappen-Unterprogrammen" und deren zufällige Vertauschung werden nicht nur zusätzliche Stromschwankungen erzeugt, die nichts mit dem Verschlüsselungsprogramm an sich zu tun haben, sondern sie tauchen auch noch zeitlich zufällig verteilt auf, wodurch ein DPA-Angriff weiter erschwert wird. Darüber hinaus ist es vorgesehen, das die Ausführung bestimmter "Attrappen-Unterprogramme" unter Berücksichtigung mindestens einer Zufallszahl zufällig ausbleiben kann, wodurch weitere Verwirrung für einen DPA-Angreifer geschaffen wird.

Bei der erfindungsgemäßen Implementierung des Verschlüsselungsprogramms könnte bspw. jede Programmebene um eine solche Zahl von "Attrappen-Unterprogramme" erweitert werden, daß die Zahl der Unterprogramme pro Programmebene insgesamt gleich ist.

Das erfindungsgemäße Verfahren ist nicht auf sogennate kontaktbehaftete tragbare Datenträger beschränkt. Vielmehr ist sie auch auf sogeannte konktaktlos arbeitende tragbare Datenträger beschränkt, bei denen der Datenaustausch und die Energieversorgung mit dem Datenaustauschgerät über elektromagnetische Strahhlung (induktiv) erfolgt, da auch hier mit einem gegenüber dem in Fig.1 dargestellten, modifizierten Meßaufbau die Leistungsaufnahme des tragbaren Datenträgers zu ermitteln ist.

Die Erfindung ist selbstverständlich auch auf die Ausführung von Entschlüsselungsprogrammen anzuwenden und nicht nur auf Verschlüsselungsprogramme, da die oben beschriebene Problematik dieselbe ist. Außerdem ist die Entschlüsselung ja nichts anderes als eine inverse Verschlüsselung und umgekehrt.

## Patentansprüche

1. Verfahren zur Ausführung eines Verschlüsselungsprogramms zur Verschlüsselung von Daten in einem mikroprozessorgestützten, tragbaren Datenträger, der zum Datenaustausch und zur Energieversorgung mit einem Datenaustauschgerät verbunden wird, wobei das Verschlüsselungsprogramm mehrere parallelisierbare Unterprogramme aufweist, wobei bei der Ausführung des Verschlüsselungsprogramms die zeitliche Ausführungsabfolge von mindestens zwei parallelisierbaren Unterprogrammen unter Berücksichtigung von mindestens einer Zufallszahl bei jeder Programmausführung zufällig vertauscht wird, und wobei die Zufallszahl von dem Datenaustauschgerät an den tragbaren Datenträger übermittelt wird.

2. Verfahren zur Ausführung eines Verschlüsselungsprogramms zur Verschlüsselung von Daten in einem mikroprozessorgestützten, tragbaren Datenträger, der zum Datenaustausch und zur Energieversorgung mit einem Datenaustauschgerät verbunden wird, wobei das Verschlüsselungsprogramm mehrere parallelisierbare Unterprogramme aufweist, wobei bei der Ausführung des Verschlüsselungsprogramms die zeitliche Ausführungsabfolge von mindestens zwei parallelisierbaren Unterprogrammen unter Berücksichtigung von mindestens einer Zufallszahl bei jeder Programmausführung zufällig vertauscht wird, wobei in dem tragbaren Datenträger eine Tabelle vorgesehen ist, in der die Ausführungsreihenfolge der parallelisierbaren Unterprogramme anhand von Reihenfolge-Positionen gespeichert ist, wobei ein Zufallszahlen-Paar bestehend aus zwei Zufallszahlen ermittelt wird, wobei die Menge der möglichen Zufallszahlen der Menge der Reihenfolge-Positionen entspricht, und wobei die Reihenfolge-Positionen der parallelisierbaren Unterprogramme entsprechend des Zufallszahlen-Paares vertauscht wird, wobei die Reihenfolge-Position eines parallelisierbaren Unterprogramms entsprechend der einen Zufallszahl gegen die Reihenfolge-Position eines anderen parallelisierbaren Unterprogramms entsprechend der zweiten Zufallszahl ausgetauscht wird.

3. Verfahren zur Ausführung eines Verschlüsselungsprogramms zur Verschlüsselung von Daten in einem mikroprozessorgestützten, tragbaren Datenträger, der zum Datenaustausch und zur Energieversorgung mit einem Datenaustauschgerät verbunden wird, wobei das Verschlüsselungsprogramm mehrere parallelisierbare Unterprogramme aufweist, wobei das Verschlüsselungsprogramm um mindestens ein eigentlich nicht zum Verschlüsselungsprogramm gehörendes Attrappen-Unterprogramm erweitert wird, und

wobei bei der Ausführung des Verschlüsselungsprogramms die zeitliche Ausführungsabfolge von mindestens zwei der parallelisierbaren Unterprogramme und der Attrappen-Unterprogramme unter Berücksichtigung von mindestens einer Zufallszahl bei jeder Programmausführung zufällig vertauscht wird.

4.  Verfahren nach Anspruch 2 oder 3, bei dem die Zufallszahl in einem Zufallszahlengenerator des tragbaren Datenträgers erzeugt wird.

5.  Verfahren nach Anspruch 4, bei dem der Zufallszahlengenerator als Programm in dem tragbaren Datenträger implementiert ist.

6.  Verfahren nach Anspruch 2 oder 3, bei dem die Zufallszahl von dem Datenaustauschgerät an den tragbaren Datenträger übermittelt wird.

7.  Verfahren nach einem der vorstehenden Ansprüche, bei dem
    bei einem Verschlüsselungsprogramm, das mehrere bei der Programmausführung zeitlich aufeinanderfolgende Programmablaufebenen mit jeweils mehreren parallelisierbaren Unterprogrammen aufweist, jeweils vor Beginn der Programmausführung die zeitliche Ausführungsreihenfolge für die Ausführung der parallelisierbaren Unterprogramme auf allen Programmablaufebenen unter Berücksichtigung von mindestens einer Zufallszahl festgelegt wird.

8.  Verfahren nach einem der vorstehenden Ansprüche 1 bis 6, bei dem
    bei einem Verschlüsselungsprogramm, das mehrere bei der Programmausführung zeitlich aufeinanderfolgende Programmablaufebenen mit jeweils mehreren parallelisierbaren Unterprogrammen aufweist, jeweils vor Beginn der Programmausführung die zeitliche Ausführungsreihenfolge für die Ausführung der parallelisierbaren Unterprogramme auf nur bestimmten Programmablaufebenen unter Berücksichtigung von mindestens einer Zufallszahl festgelegt wird.

9.  Verfahren nach einem der vorstehenden Ansprüche 1 bis 6, bei dem
    bei einem Verschlüsselungsprogramm, das mehrere bei der Programmausführung zeitlich aufeinanderfolgende Programmablaufebenen mit jeweils mehreren parallelisierbaren Unterprogrammen aufweist, jeweils vor dem Eintritt in eine neue Programmablaufebene die zeitliche Ausführungsreihenfolge für die Ausführung der parallelisierbaren Unterprogramme auf dieser Programmablaufebene unter Berücksichtigung von mindestens einer Zufallszahl festgelegt wird.

10. Verfahren nach Anspruch 1, bei dem
    in dem tragbaren Datenträger eine Tabelle vorgesehen ist, in der die Ausführungsreihenfolge der parallelisierbaren Unterprogramme anhand von Reihenfolge-Positionen gespeichert ist,
    ein Zufallszahlen-Paar bestehend aus zwei Zufallszahlen ermittelt wird, wobei die Menge der möglichen Zufallszahlen der Menge der Reihenfolge-Positionen entspricht,
    die Reihenfolge-Positionen der parallelisierbaren Unterprogramme entsprechend des Zufallszahlen-Paares vertauscht wird, wobei die Reihenfolge-Position eines parallelisierbaren Unterprogramms entsprechend der einen Zufallszahl gegen die Reihenfolge-Position eines anderen parallelisierbaren Unterprogramms entsprechend der zweiten Zufallszahl ausgetauscht wird.

11. Verfahren nach Anspruch 2 oder 10,
    **dadurch gekennzeichnet, dass** das Ermitteln eines Zufallszahlen-Paars und das entsprechende Vertauschen der Reihenfolge-Postionen der parallelisierbaren Unterprogramme zwei- oder mehrfach angewendet wird.

12. Verfahren nach Anspruch 1 oder 2, bei dem
    das Verschlüsselungsprogramm um mindestens ein eigentlich nicht zum Verschlüsselungsprogramm gehörendes Attrappen-Unterprogramm erweitert wird, dessen Ausführungsreihenfolge jeweils unter Berücksichtigung von mindestens einer Zufallszahl mitvertauscht wird.

13. Verfahren nach Anspruch 3 oder 12, bei dem
    bei der Ausführung des Verschlüsselungsprogramm jeweils unter Berücksichtigung von mindestens einer Zufallszahl die Ausführung bestimmter Attrappen-Unterprogramme ausbleibt.

14. Verfahren nach einem der Ansprüche 12 oder 13, bei dem
    jede Programmablaufebene um Attrappen-Unterprogramme erweitert wird, so dass die Zahl der Unterprogramme pro Programmablaufebene gleich ist.

**Claims**

1.  Method of executing an encryption program for the encryption of data in a microprocessor-aided, portable data carrier being connected to a data exchange device for data exchange and energization, wherein the encryption program comprises several parallelizable subroutines,
    wherein, in the execution of the encryption program, the temporal execution sequence of at least two parallelizable subroutines is randomly exchanged at each program execution, taking at least one random number into account, and
wherein the random number is communicated to the portable data carrier from the data exchange device.

2. Method of executing an encryption program for the encryption of data in a microprocessor-aided, portable data carrier being connected to a data exchange device for data exchange and energization, wherein the encryption program comprises several parallelizable subroutines,
wherein, in the execution of the encryption program, the temporal execution sequence of at least two parallelizable subroutines is randomly exchanged at each program execution, taking at least one random number into account,
wherein, in the portable data carrier, there is provided a table in which the execution order of the parallelizable subroutines is stored on the basis of order positions,
wherein a random number pair consisting of two random numbers is determined, with the set of the random numbers possible corresponding to the set of the order positions, and
wherein the order positions of the parallelizable subroutines are exchanged corresponding to the random number pair, with the order position of a parallelizable subroutine corresponding to the one random number being exchanged for the order position of another parallelizable subroutine corresponding to the second random number.

3. Method of executing an encryption program for the encryption of data in a microprocessor-aided, portable data carrier being connected to a data exchange device for data exchange and for energization, wherein the encryption program comprises several parallelizable subroutines,
wherein the encryption program is extended by at least a dummy subroutine actually not belonging to the encryption program, and
wherein, in the execution of the encryption program, the temporal execution sequence of at least two of the parallelizable subroutines and the dummy subroutines is randomly exchanged at each program execution, taking at least one random number into account.

4. Method of claim 2 or 3, wherein
the random number is generated in a random number generator of the portable data carrier.

5. Method of claim 4, wherein
the random number generator is implemented as a program in the portable data carrier.

6. Method of claim 2 or 3, wherein
the random number is communicated to the portable data carrier from the data exchange device.

7. Method of one of the preceding claims, wherein
in an encryption program comprising several program flow levels temporally successive in the program execution with several parallelizable subroutines each, the temporal execution order for the execution of the parallelizable subroutines is fixed on all program flow levels before the beginning of the program execution each, taking at least one random number into account.

8. Method of one of the preceding claims 1 to 6, wherein
in an encryption program comprising several program flow levels temporally successive in the program execution with several parallelizable subroutines each, the temporal execution order for the execution of the parallelizable subroutines is fixed on only certain program flow levels before the beginning of the program execution each, taking at least one random number into account.

9. Method of one of the previous claims 1 to 6, wherein
in an encryption program comprising several program flow levels temporally successive in the program execution with several parallelizable subroutines each, before entering a new program flow level each, the temporal execution order for the execution of the parallelizable subroutines is fixed on this program flow level, taking at least one random number into account.

10. Method of claim 1, wherein
in the portable data carrier, there is provided a table in which the execution order of the parallelizable subroutines is stored on the basis of order positions,
a random number pair consisting of two random numbers is determined, with the set of the random numbers possible corresponding to the set of the order positions, and
the order positions of the parallelizable subroutines are exchanged corresponding to the random number pair, with the order position of a parallelizable subroutine corresponding to the one random number being exchanged for the order position of another parallelizable subroutine corresponding to the second random number.

11. Method of claim 2 or 10,
**characterized in that** determining a random number pair and correspondingly exchanging the order positions of the parallelizable subroutines is applied two or several times.

12. Method of claim 1 or 2, wherein
the encryption program is extended by at least a dummy subroutine, actually not belonging to the encryption program, the execution order of which is also exchanged, taking at least one random number into account.

**13.** Method of claim 3 or 12, wherein
in the execution of the encryption program, the execution of certain dummy subroutines is omitted, taking at least one random number into account.

**14.** Method of one of claims 12 or 13, wherein
each program flow level is extended by dummy subroutines, so that the number of subroutines per program flow level is equal.

**Revendications**

**1.** Procédé pour l'exécution d'un programme de chiffrage pour le chiffrage de données dans un support de données portable avec microprocesseur relié, pour l'échange de données et l'alimentation en énergie, à un appareil d'échange de données, le programme de chiffrage présentant plusieurs sous-programmes pouvant être mis en parallèle,
lors de l'exécution du programme de chiffrage étant changé de manière aléatoire à chaque exécution de programme l'ordre d'exécution dans le temps d'au moins deux sous-programmes pouvant être mis en parallèle, compte tenu d'au moins un nombre aléatoire, et
le nombre aléatoire étant transmis par l'appareil d'échange de données au support de données portable.

**2.** Procédé pour l'exécution d'un programme de chiffrage pour le chiffrage de données dans un support de données portable avec microprocesseur relié, pour l'échange de données et l'alimentation en énergie, à un appareil d'échange de données, le programme de chiffrage présentant plusieurs sous-programmes pouvant être mis en parallèle,
lors de l'exécution du programme de chiffrage étant changé de manière aléatoire à chaque exécution de programme l'ordre d'exécution dans le temps d'au moins deux sous-programmes pouvant être mis en parallèle, compte tenu d'au moins un nombre aléatoire,
dans le support de données portable étant prévu un tableau dans lequel est mémorisé l'ordre d'exécution des sous-programmes pouvant être mis en parallèle à l'aide de positions d'ordre,
une paire de nombres aléatoires composée de deux nombres aléatoires étant déterminée, la quantité de nombres aléatoires correspondant à la quantité de positions d'ordre, et
les positions d'ordre des sous-programmes pouvant être mis en parallèle étant changées selon la paire de nombres aléatoires, la position d'ordre de l'un des sous-programmes pouvant être mis en parallèle correspondant à l'un des nombres aléatoires étant changée par la position d'ordre d'un autre sous-programme pouvant être mis en parallèle correspondant au deuxième nombre aléatoire.

**3.** Procédé pour l'exécution d'un programme de chiffrage pour le chiffrage de données dans un support de données portable avec microprocesseur relié, pour l'échange de données et l'alimentation en énergie, à un appareil d'échange de données, le programme de chiffrage présentant plusieurs sous-programmes pouvant être mis en parallèle,
le programme de chiffrage étant complété par au moins un sous-programme d'attrapes qui n'appartient en réalité pas au programme de chiffrage, et lors de l'exécution du programme de chiffrage étant changé de manière aléatoire à chaque exécution de programme l'ordre d'exécution dans le temps d'au moins deux sous-programmes pouvant être mis en parallèle et des sous-programmes d'attrapes, compte tenu d'au moins un nombre aléatoire.

**4.** Procédé selon la revendication 2 ou 3, dans lequel le nombre aléatoire est généré dans un générateur de nombres aléatoires du support de données portable.

**5.** Procédé selon la revendication 4, dans lequel
le générateur de nombres aléatoires est mis en oeuvre sous forme de programme dans le support de données portable.

**6.** Procédé selon la revendication 2 ou 3, dans lequel le nombre aléatoire est transmis par l'appareil d'échange de données au support de données portable.

**7.** Procédé selon l'une des revendications précédentes, dans lequel
dans un programme de chiffrage présentant plusieurs niveaux de déroulement de programme, chacun avec plusieurs sous-programmes pouvant être mis en parallèle, successifs dans le temps lors de l'exécution du programme, l'ordre de réalisation dans le temps pour l'exécution des sous-programmes pouvant être mis en parallèle est fixé, avant le début de chaque exécution de programme, à tous les niveaux de déroulement de programme en tenant compte d'au moins un nombre aléatoire.

**8.** Procédé selon l'une des revendications précédentes 1 à 6, dans lequel
dans un programme de chiffrage présentant plusieurs niveaux de déroulement de programme, chacun avec plusieurs sous-programmes pouvant être mis en parallèle, successifs dans le temps lors de l'exécution du programme, l'ordre d'exécution dans le temps pour l'exécution des sous-programmes pouvant être mis en parallèle est fixé, avant le début de chaque exécution de programme, uniquement à des niveaux de déroulement de programme déterminés en tenant compte d'au moins un nombre aléatoire.

9. Procédé selon l'une des revendications précédentes 1 à 6, dans lequel
dans un programme de chiffrage présentant plusieurs niveaux de déroulement de programme, chacun avec plusieurs sous-programmes pouvant être mis en parallèle, successifs dans le temps lors de l'exécution du programme, l'ordre d'exécution dans le temps pour l'exécution des sous-programmes pouvant être mis en parallèle est, chaque fois avant l'entrée à un nouveau niveau de déroulement de programme, fixé à ce niveau de déroulement de programme en tenant compte d'au moins un nombre aléatoire.

10. Procédé selon la revendication 1, dans lequel
dans le support de données portable est prévu un tableau dans lequel l'ordre d'exécution des sous-programmes pouvant être mis en parallèle est mémorisé à l'aide de positions d'ordre,
une paire de nombres aléatoires composée de deux nombres aléatoires est déterminée, la quantité de nombres aléatoires possibles correspondant à la quantité de positions d'ordre,
les positions d'ordre des sous-programmes pouvant être mis en parallèle sont changées selon la paire de nombres aléatoires, la position d'ordre d'un sous-programme pouvant être mis en parallèle selon l'un des nombres aléatoires étant changée par la position d'ordre d'un autre sous-programme pouvant être mis en parallèle selon le deuxième nombre aléatoire.

11. Procédé selon la revendication 2 ou 10,
**caractérisé par le fait que** la détermination d'une paire de nombres aléatoires et le changement correspondant des postions d'ordre des sous-programmes pouvant être mis en parallèle sont appliqués deux ou plusieurs fois.

12. Procédé selon la revendication 1 ou 3, dans lequel
le programme de chiffrage est complété par au moins un sous-programme d'attrapes qui n'appartient en réalité pas au programme de chiffrage et dont l'ordre d'exécution est chaque fois également changé en tenant compte d'au moins un nombre aléatoire.

13. Procédé selon la revendication 3 ou 12, dans lequel
lors de l'exécution du programme de chiffrage est chaque fois omise, compte tenu d'au moins un nombre aléatoire, l'exécution de sous-programmes d'attrapes déterminés.

14. Procédé selon l'une des revendications 12 ou 13, dans lequel

chaque niveau de déroulement de programme est complété par des sous-programmes d'attrapes, de sorte que le nombre de sous-programmes par niveau de déroulement de programme soit identique.

Kartenterminal

Oszilloskop

$R_{Meß.} = 1\,\Omega$

Chipmodul mit dem
Mikroprozessorbaustein

$V_{cc}$

Kontaktflächen

Chipkarte

*Fig.1*

*Fig.2*

1.Programmebene

$S_1^{(1)}$   $S_1^{(2)}$   $S_1^{(3)}$   $S_1^{(4)}$

2. Progammebene

$S_2^{(1)}$   $S_2^{(2)}$

3. Programmebene

$S_3^{(1)}$   $S_3^{(2)}$   $S_3^{(3)}$

m-te Programmebene

$S_m^{(1)}$   $S_m^{(2)}$   $S_m^{(3)}$

*Fig.3*

Programmdurchlauf nach dem Stand der
Technik

1.Programmebene $\quad$ $S_1^{(1)}$ → $S_1^{(2)}$ → $S_1^{(3)}$ → $S_1^{(4)}$

2. Progammebene $\quad$ $S_2^{(1)}$ $S_2^{(2)}$

3. Programmebene $\quad$ $S_3^{(1)}$ → $S_3^{(2)}$ → $S_3^{(3)}$

m-te Programmebene $\quad$ $S_m^{(1)}$ → $S_m^{(2)}$ → $S_m^{(3)}$

*Fig.4*

1.Programmebene  $S_1^{(1)}$  $S_1^{(2)}$  $S_1^{(3)}$  $S_1^{(4)}$

2. Progammebene  $S_2^{(1)}$  $S_2^{(2)}$  $S_2^{(3)}$  $S_2^{(4)}$

3. Programmebene  $S_3^{(1)}$  $S_3^{(2)}$  $S_3^{(3)}$  $S_3^{(4)}$

m-te Programmebene  $S_m^{(1)}$  $S_m^{(2)}$  $S_m^{(3)}$  $S_m^{(4)}$

*Fig.5*

Tabelle mit den Startadressen von parallelisierbaren ·
Unterprogrammen

| |
|---|
| 1. Startadresse des Unterprogramms, das als erstes auszuführen ist: z.B. S1 |
| 2. Startadresse des Unterprogramms, das als zweites auszuführen ist: z.B. S2 |
| 3. Startadresse des Unterprogramms, das als drittes auszuführen ist: z.B. S3 |
| 4. Startadresse des Unterprogramm, das als viertes auszuführen ist: z.B. S4 |

*Fig.6*

## *Fig.7*

### Vertausch von Startadressen anhand von Zufallszahlen

Ermittlung eines Zufallszahlen-Paares (Z1, Z2) anhand eines Zufallszahlengenerators

Beispiel:    Z1 = 2
             Z2 = 4

⇨ Startadresse in der 2.Zeile der Startadressen-Tabelle wird gegen die Startadresse in der 4. Zeile ausgetauscht

⇨ neue Startadressen-Tabelle

| 1. | Startadresse von Unterprogramm S1 |
| 2. | Startadresse von Unterprogramm S4 |
| 3. | Startadresse von Unterprogramm S3 |
| 4. | Startadresse von Unterprogramm S2 |

Erneute Ermittlung eines Zufallszahlen-Paares

Beispiel:    Z1 = 4
             Z2 = 3

⇨ Startadresse in der 4. Zeile der Startadressen-Tabelle wird gegen die Startadresse in der 3. Zeile ausgetauscht

⇨ neue Startadressen-Tabelle

| 1. | Startadresse von Unterprogramm S1 |
| 2. | Startadresse von Unterprogramm S4 |
| 3. | Startadresse von Unterprogramm S2 |
| 4. | Startadresse von Unterprogramm S3 |

### Hinsichtlich der Bearbeitungsreihenfolge von Unterprogrammen permutierter Programmablauf

Start → S1 → S4 → S2 → S3 → End